# EUROPÄISCHE PATENTSCHRIFT

(11) **EP 0 630 489 B1**
(45) Veröffentlichungstag und Bekanntmachung des Hinweises auf die Patenterteilung: **04.12.1996**
(21) Anmeldenummer: 92906662.9
(22) Anmeldetag: 10.03.1992
(51) Int. Cl.: G03B 19/20

(54) **LAUFBILD-FILMAUFNAHMEKAMERA**
MOTION-PICTURE CAMERA
CAMERA

(43) Veröffentlichungstag der Anmeldung: 28.12.1994
(73) Patentinhaber: ARNOLD & RICHTER CINE TECHNIK GMBH & CO. BETRIEBS KG., D-80799 München (DE)
(72) Erfinder: BAYERL, Eugen, D-8011 Kirchheim (DE)
(74) Vertreter: Ninnemann, Detlef, Dipl.-Ing.
(86) Internationale Anmeldenummer: DE9200205
(87) Internationale Veröffentlichungsnummer: WO9318433

(56) Entgegenhaltungen:
- FR-A- 2 029 969
- GB-A- 2 076 177
- US-A- 3 913 116
- US-A- 4 705 374
- Bedienungsanleitung ARRIFLEX 16 SR II, Arnold & Richter Cine Technik, München 1984, Seiten 27-29 und 49-51

## Beschreibung

Die Erfindung bezieht sich auf eine Laufbild-Filmaufnahmekamera nach dem Oberbegriff des Anspruchs 1.

Aus der DE-C-36 15 424 ist eine Laufbild-Filmlaufnahmekamera mit einem Filmaufnahme-Strahlengang bekannt, aus dem mittels eines periodisch unterbrechenden Spiegels zeitweise ein Sucherstrahlengang abgezweigt wird. Aus diesem Sucherstrahlengang wird durch einen Strahlenteiler ein Videortrahlengang zu einer Videoaufnahmekamera abgezweigt, so daß gleichzeitig Film- und Fernsehaufnahmen gemacht werden können.

Diese bekannte Kamera weist einen sperrigen Aufbau auf, da die Sucherlupe starr oberhalb des Kameragehäuses parallel zum Objektiv angeordnet ist und die Videoaufnahmekamera senkrecht zur Objektivachse. Ein kompakter Kameraaufbau mit Handgriff und ansetzbaren Filmkassetten ist bei einer derartigen Anordnung nicht möglich.

In der DE 22 00 690 C3 ist eine Laufbild-Siegelreflexkamera mit Betrachtungslupe beschrieben, bei welcher der von der Spiegelreflexeinrichtung aus dem Aufnahmestrahlengang abgespaltene Sucherstrahlengang mittig oberhalb des Aufnahmeobjetivs aus dem Kameragehäuse austritt. Um eine linksäugige und rechtsäugige Betrachtung zu ermöglichen, ist der Sucheraustritt aus dem Kameragehäuse an dessen Frontseite angeordnet und um die Mittelachse dieses Sucheraustrittes ist der mittels wenigstens eines angelenkten Lupenschenkels und eines Okularträgers nach hinten umgelenkte Okulareinblick der Betrachtungslupe zwischen der rechten und der linken Kameraseite verschwenkbar.

Es besteht ein Bedarf an Laufbild-Filmaufnahmekameras, die kompakt aufgebaut und mit Schubkassetten ausgerüstet sind und trotz dieses kompakten Aufbaus vielseitig einsetzbar sind.

Der Erfindung liegt die Aufgabe zugrunde eine kompakt aufgebaute, tragbare Laufbildkamera mit Einschubkassetten derart zu gestalten, daß sie auch bei Anordnung eines Videoausganges eine beidseitige Anordnung der Betrachtungseinrichtung zuläßt.

Erfindungsgemäß wird diese Aufgabe durch die technische Lehre des Inhalts des Anspruchs 1 gelöst.

Die erfindungsgemäße Lösung ermöglicht das Verschwenken der Betrachtungseinrichtung (Sucherlupe) einer Laufbildkamera zu beiden Seiten des Kameraobjektivs, so daß eine rechts- und linksseitige Betrachtung des Aufnahmeobjektes problemlos möglich ist auch wenn eine zusätzliche Videoeinrichtung vorgesehen wird.

In vorteilhafter Weise ist im Sucherstrahlengang, der insbesondere von einer Spiegelreflexeinrichtung aus dem Filmaufnahme-Strahlengang abgezweigt ist, ein teildurchlässiger refektierender Strahlenteiler angeordnet, der eine Sucherstrahlkomponente in einen Sucheraustritt an der Frontseite des Kameragehäuses reflektiert. Um die Mittelachse dieses Sucheraustritts ist ein mittels eines angelenkten Lupenschenkels und eines an diesen angelenkten Okularträgers nach hinten umgelenkter Okulareinblick der Betrachtungslupe zwischen der rechten und linken Kameraseite verschwenkbar und der vom Strahlenteiler durchgelassene Videostrahlengang ist durch ein Drehlager eines Kameragriffes hindurch einem an diesem angeordneten Videoadapter zugeführt.

In vorteilhafter Weise sind durch diesen konstruktiven Aufbau sowohl der Sucheraustritt als auch der Austritt des Videostrahlenganges am vorderen Ende der Kamera angeordnet und die Verbindung des Videoadapters mit dem Kameragriff und die schwenkbare Lagerung des Kameragriffes ermöglicht, daß durch Verschwenken des Handgriffes die Rückseite der Kamera für eine Einschubkassette leicht zugänglich ist und daß in der Betriebsstellung des Handgriffes eine ausreichende Griff länge zur Verfügung steht, um mittels des Handgriffes die Laufbild-Filmaufnahmekamera leicht und bequem zu transportieren.

Darüber hinaus ermöglicht die Verschwenkung des Okulareinblickes von der linken Kameraseite zur rechten einen beidseitigen Einblick und ferner bei verschiedenen Kameraeinsätzen Mittelstellungen des Okulareinblickes. Dieser Okulareinblick kann wegen der Anordnung des Videodapters an diesem in verschwenkter Lage vorbeigeführt und danach in Betrieb genommen werden.

Besonders raumsparend ist es, daß in der Betriebsstellung des Kameragriffs der Videostrahlengang parallel zum Objektiv aus dem Videoadapter austritt.

Um den Austritt des Videostrahlenganges aus der Kamera so weit wie möglich nach vorn zu verlegen, so daß trotz der Einschubkassette eine ausreichende Handgrifflänge zur Verfügung steht, ist zwischen dem von der Reflexeinrichtung aus dem Filmaufnahmestrahlengang abgelenkten Sucherstrahlengang und dem Strahlenteiler eine diesen Sucherstrahlengang zur Frontseite des Kameragehäuses hin versetzende optische Doppelspiegeleinrichtung, insbesondere eine Rhomboidprisma eingeschaltet.

Durch diesen Aufbau wird der beispielsweise von einer verspiegelten Umlaufblende periodisch abgelenkte Sucherstrahlengang parallel zur Frontseite der Kamera hin versezt, um dort dem Strahlenteiler zugeführt zu werden. Dies ermöglicht, das Drehlager bzw. den Griffsockel für den Handgriff im Bereich der oberen Vorderkante der Filmkamera auszubilden.

Ein Ausührungsbeispiel der Erfindung soll unter Bezugnahme auf die Figuren der Zeichnung beschrieben werden. Es zeigen:
- Figur 1: eine schematische Längsschnittansicht eines Teiles der Laufbild-Filmkamera,
- Figur 2: eine schematische Vorderansicht eines Teiles der Laufbildkamera,
- Figur 3: eine teilweise geschnittene Draufsicht auf einen vorderen Abschnitt der Laufbildkamera.

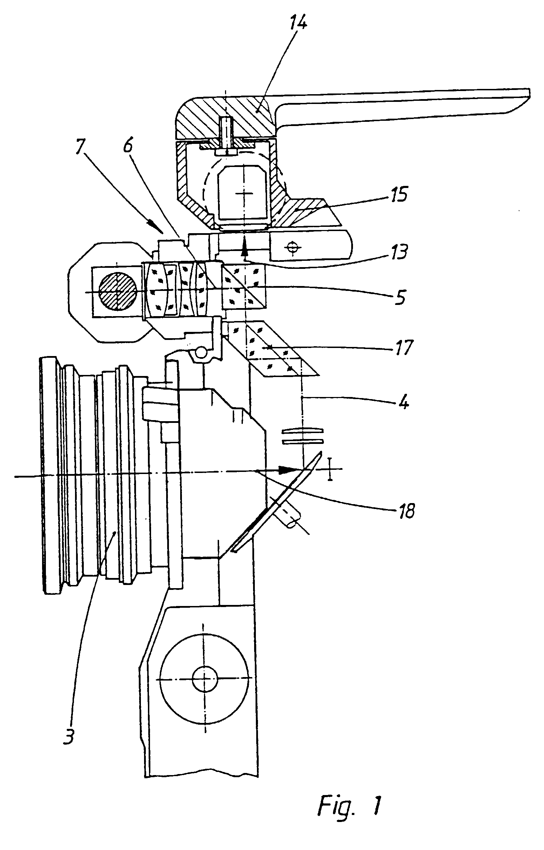

Gemäß Figur 1 weist die Laufbildkamera ein Gehäuse 1 auf, an dessen Frontseite 2 ein Aufnahmeobjektiv 3 angeordnet ist. Der das Aufnahmeobjektiv 3 durchsetzende Filmaufnahme-Strahlengang wird periodisch von einer rotierenden Spiegelblende unterbrochen, die einen Sucherstrahlengang 4 aus diesem Filmaufnahme-Strahlengang 18 nach oben ablenkt.

Dieser Sucherstrahlengang 4 wird mittels eines Rhomboidprismas 17 zur Frontseite 2 der Laufbildkamera versetzt und trifft auf einen teilreflektierenden bzw. teildurchlässigen Strahlenteiler 5.

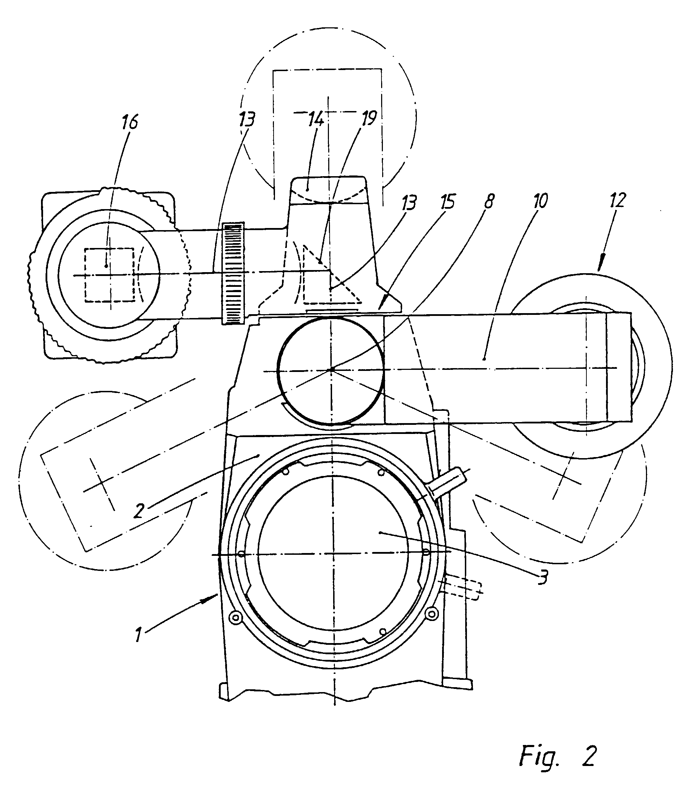

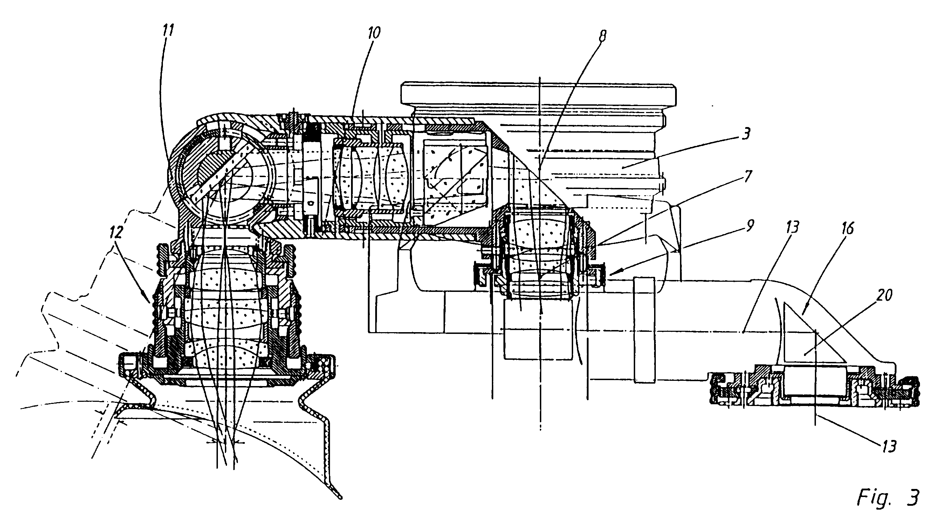

Von diesem Strahlenteiler 5 wird eine Strahlenkomponente 6 zu einem Sucheraustritt 7 reflektiert, der in der Frontseite 2 des Kameragehäuses 1 angeordnet ist. Gemäß Figur 3 ist um die Mittelachse 8 ein bei 9 angelenkter Lupenschenkel 10 in einem Bereich von über 200° verschwenkbar gelagert, wie Figur 2 mit der strichpunktierten Darstellung verschiedener Stellungen des Lupenschenkels 10 verdeutlicht. Am Ende des Lupenschenkels 10 ist ein Okularträger 11 drehbar gelagert, an dem der Okulareinblick 12 der Sucherlupe befestigt ist.

Wie Figur 3 zeigt, wird durch diesen Aufbau ein linksseitiger Einblick und infolge der strichpunktiert dargestellten Schwenkbarkeit des Okulareinblicks 12 eine rechts- und linksäugige Betrachtung des vom Aufnahmeobjektiv 3 erzeugten Bildes ermöglicht. Durch eine Verschwenkung um die Mittelachse 8 kann der Okulareinblick 12 für einen rechtsseitigen Einblick verwendet werden, wobei auch auf der rechten Seite ein links- und rechtsäugiger Einblick in den Okulareinblick möglich ist.

Der vom Strahlenteiler 5 durchgelassene Anteil des Sucherstrahlengangs 4 bildet einen Videostrahlengang 13, der in Figur 1 schematisch dargestellt ist. In der Oberseite des Kameragehäuses 1 ist an der Frontseite 2 ein Griffsockel 15 des Kameragriffes ausgebildet und in diesem Griffsockel 15 ist ein Handgriff 14 des Kameragriffes drehbar gelagert.

Wie die Figuren 2 und 3 schematisch zeigen, wird der Videostrahlengang 13 vom Strahlenteiler 5 nach oben durch den Griffsockel 15 des Kameragriffes hindurchgeführt und von einem Reflektionsprisma 19 im Griffsockel 15 einem Videoadapter 16 zugeleitet, der am Kameragriff montiert ist. Im Videoadapter 16 wird der Videostrahlengang 13 durch ein Prisma 20 umgelenkt, so daß der Videostrahlengang 13 parallel zum Aufnahmeobjektiv 3 aus dem Videoadapter 16 austritt. Am Videoadapter 16 wird in an sich bekannter Weise eine Videokamera angeschlossen, die beispielsweise über ein Videokabel mit einem Monitor verbunden wird und somit die getrennte Betrachtung des Aufnahmebildes durch einen Assistenten zuläßt.

Durch die erfindungsgemäße Merkmalskombination wird wie dargestellt der Sucherstrahlengang so geleitet, daß eine beidseitige und auf beiden Seiten eine linksäugige und eine rechtsäugige Bildbetrachtung möglich ist, wobei der Videostrahlengang am vorderen Ende der Kamera derart austreten kann, daß die Kamera mittels eines Handgriffes des Kameragriffes tragbar ist, der eine entsprechende Länge aufweisen kann.

Der Handgriff 14 des Kameragriffes, der wegen seiner Schwenkbarkeit eine zur einfachen Handhabbarkeit hinreichende Länge aufweisen kann, ohne einen Kassettenwechsel zu behindern, ist drehbar auf einem Griffsockel 15 des Kameragriffes gelagert und mit dem Videoausgang kombiniert, so daß beide Teile zum Einsetzen einer Einschubkassette verschwenkt werden können.

## Patentansprüche

1. Laufbild-Filmaufnahmekamera mit
einem Kameragehäuse (1) mit einem Filmaufnahme-Strahlengang (18), an dessen Frontseite (2) ein Aufnahmeobjektiv. (3) angeordnet ist,
einem aus dem Filmaufnahme-Strahlengang (18) mittels einer Spiegelreflexeinrichtung abgelenkten Sucherstrahlengang (4),
einer im Sucherstrahlengang (4) angeordneten reflektierenden Einrichtung (5), die den Sucherstrahlengang derart umlenkt, daß eine Sucherstrahlenkomponente (6) in einen Sucheraustritt (7) an der Frontseite (2) des Kameragehäuses (1) reflektiert wird,
einem an den Sucheraustritt (7) angelenkten Lupenschenkel (10),
einem an den Lupenschenkel (10) angelenkten Okularträger (11), mit dem ein zur Rückseite des Kameragehäuses (1) umgelenkter Okulareinblick (12) einer Betrachtungslupe verbunden ist, der um die Mittelachse (8) des Sucheraustritts (7) zwischen der rechten und der linken Seite des Kameragehäuses (1) verschwenkbar ist,
**dadurch gekennzeichnet, daß** die den Sucherstrahlengang umlenkende reflektierende Einrichtung (5) als teildurchlässiger Strahlenteiler ausgebildet ist, um einen Videostrahlengang (13) vom Sucherstrahlengang (4) abzuzweigen und
**daß** in der Oberseite des Kameragehäuses (1) an der Frontseite (2) ein Griffsockel (15) eines darin drehbar gelagerten Kamerahandgriffs (14) angeordnet ist, wobei am Griffsockel (15) ein Videoadapter (16) vorgesehen ist, dem der von dem Strahlenteiler (5) durchgelassene Videostrahlengang (13) durch den Griffsockel (15) zugeführt ist.

2. Laufbild-Filmaufnahmekamera nach Anspruch 1, **dadurch gekennzeichnet,** daß in der Betriebsstellung des Kamera-Handgriffs (14) der Videostrahlengang (13) parallel zum Objektiv (3) aus dem Videoadapter (16) austritt.

3. Laufbild-Filmaufnahmekamera nach Anspruch 1 oder 2, dadurch gekennzeichnet, daß zwischen dem von der Spiegelreflexeinrichtung aus dem Filmaufnahme-Strahlengang (18) abgelenkten Sucherstrahlengang (4) und dem Strahlenteiler (5) eine den Sucherstrahlengang (4) zur Frontseite (2) des Kameragehäuses (1) hin versetzende optische Doppelspiegeleinrichtung (17), insbesondere ein Rhomboidprisma, eingeschaltet ist.

## Claims

1. Animated film recording camera with
a camera housing (1) with a film recording beam path (18) wherein an object lens (3) is mounted on the front (2) of the housing,
a viewfinder beam path (4) deflected from the film recording beam path (18) by means of a reflex system,
a reflecting device (5) mounted in the viewfinder beam path (4) to divert the viewfinder beam path so that a viewfinder beam component (6) is reflected into a viewfinder outlet (7) on the front (2) of the camera housing (1),
a magnifier arm (10) attached to the viewfinder outlet (7), an eyepiece support (11) attached to the magnifier arm (10) and to which is connected an eyepiece sight (12) of a viewer magnifier diverted towards the back of the camera housing (1) and adapted to swivel about the centre axis (8) of the viewfinder outlet (7) between the right and left side of the camera housing (1),
characterised in that the reflecting system (5) which deflects the viewfinder path is designed as a partially permeable beam divider in order to branch off a video beam path (13) from the viewfinder beam path (4) and
that in the top side of the camera housing on the front side (2) there is a grip socket (15) of a camera handle (14) which is mounted rotatable therein wherein a video adaptor (16) is provided on the grip socket (15) and the video beam path (13) let through by the beam divider (5) is supplied to the adaptor through the grip socket (15).

2. Animated film recording camera according to claim 1 characterised in that in the operating position of the camera handle (14) the video beam path (13) exits the video adaptor (16) parallel to the lens (3).

3. Animated film recording camera according to claim 1 or 2 characterised in that between the viewfinder beam path (4) deflected by the reflex system out from the film recording beam path (18), and the beam divider (5) there is an optical twin reflex system (17), more particularly a rhomboid prism, which moves the viewfinder beam path (4) towards the front side (2) of the camera housing (1).

## Revendications

1. Caméra cinématographique comportant
un boîtier de caméra (1) pourvu d'un socle (15) formant organe de préhension et sur la face avant (2) duquel est disposé un objectif de prise de vues (3),
un trajet de rayonnement (4) du viseur dévié à partir du trajet de rayonnement de prise de vues (18) au moyen d'un dispositif reflex à miroir,
un dispositif réfléchissant (5), qui est disposé dans le trajet du rayonnement (4) du viseur et qui dévie le trajet de rayonnement du viseur de telle sorte qu'une composante (6) du rayonnement du viseur est réfléchie dans une sortie (7) du viseur sur la face avant (2) du boîtier (1) de la caméra,
une branche (10) de dispositif de grossissement, articulée sur la sortie (7) du viseur,
un porte-oculaire (11), articulé sur la branche (10) du dispositif de grossissement et auquel est relié un oculaire de visée (12) rabattu sur le côté arrière du boîtier (1) de la caméra, d'une lentille de visée, qui peut basculer autour de l'axe médian (8) de la sortie (7) du viseur, entre le côté droit et le côté gauche du boîtier (1) de la caméra,
caractérisée en ce
que le dispositif réfléchissant (5), qui dévie le trajet de rayonnement du viseur, est agencé sous la forme d'un diviseur de rayonnement partiellement transparent, servant à dévier un trajet de rayonnement vidéo (13) à partir du trajet de rayonnement (4) du viseur, et que dans la face supérieure du boîtier (1) de la caméra et sur la face avant (2) est disposé un socle (15) formant organe de préhension d'une poignée (14) de la caméra, montée rotative dans ce socle, sur lequel est prévu un adaptateur vidéo (16), auquel le trajet de rayonnement vidéo (13), transmis par le diviseur de rayonnement (5), est envoyé à travers le socle (15) formant organe de préhension.

2. Caméra cinématographique selon la revendication 1, caractérisée en ce que lorsque la poignée (14) de la caméra est dans la position de fonctionnement, le trajet de rayonnement vidéo (13) sort de l'adaptateur vidéo (16) parallèlement à l'objectif (3).

3. Caméra cinématographique selon la revendication 1 ou 2, caractérisée en ce qu'entre le trajet du rayonnement (4) du viseur, qui est dévié par le dispositif reflex à miroir à partir du trajet de rayonnement cinématographique (18), et le diviseur de rayonnement (5) est inséré un dispositif optique (17) à deux miroirs, notamment un prisme rhomboïdal qui décale le trajet du rayonnement (4) du viseur en direction de la face avant (2) du boîtier (1) de la caméra.
